# EUROPEAN PATENT SPECIFICATION

(11) **EP 1 356 744 B1**
(45) Date of publication and mention of the grant of the patent: **20.02.2008**
(21) Application number: 02076575.6
(22) Date of filing: 22.04.2002
(51) Int. Cl.: A23L 1/226, A23L 1/227

(54) **Flavouring compositions containing N-acetylglycine**
Aromatische Zusammensetzungen enthaltend N-Acetylglycine
Compositions aromatisantes contenant N-acetylglycine

(43) Date of publication of application: 29.10.2003
(73) Proprietor: Société des Produits Nestlé S.A., 1800 Vevey (CH)
(72) Inventor: Grigorov, Martin, 1066 Epalinges (CH); Schlichtherle-Cerny, Hedwig, 1093 La Conversion (CH); Affolter, Michael, 1073 Savigny (CH); Kochhar, Sunil, Claies-aux-Moines, 1073 Savigny (CH); Juillerat, Marcel Alexandre, Vers-Chez-Les-Blancs, 1000 Lausanne 26 (CH)
(74) Representative: Thomas, Alain

(56) References cited:
- PATENT ABSTRACTS OF JAPAN vol. 007, no. 011 (C-145), 18 January 1983 (1983-01-18) & JP 57 170146 A (LOTTE KK), 20 October 1982 (1982-10-20)
- DATABASE BIOSIS [Online] BIOSCIENCES INFORMATION SERVICE, PHILADELPHIA, PA, US; 1984 TADA M ET AL: "L ORNITHYLTAURINE A NEW SALTY PEPTIDE" Database accession no. PREV198579021420 XP002213182 & JOURNAL OF AGRICULTURAL AND FOOD CHEMISTRY, vol. 32, no. 5, 1984, pages 992-996, ISSN: 0021-8561
- DATABASE MEDLINE [Online] October 2001 (2001-10) WADA A ET AL: "Taste-enhancing effects of glycine on the sweetness of glucose: a gustatory aspect of symbiosis between the ant, Camponotus japonicus, and the larvae of the lycaenid butterfly, Niphanda fusca." Database accession no. NLM11595675 XP002213183 & CHEMICAL SENSES. ENGLAND OCT 2001, vol. 26, no. 8, October 2001 (2001-10), pages 983-992, ISSN: 0379-864X

## Description

The present invention relates to the subject of flavour enhancing compositions for flavouring food-stuffs. The present invention particularly relates to compositions with umami taste.
Proteolytic reactions play an important role for the development of flavor in protein-rich foods like cheese, meat, sausage, and fermented soy products. During proteolysis in fermentative or pure enzymatic processes free amino acids and peptides are formed. Hydrolyzed vegetable proteins, e.g. soy sauce, are widely used as savory ingredients in a variety of foods because of their "umami" taste properties.
Besides the four basic tastes sweet, acid, salty and bitter, the glutamate-like taste has been widely discussed in the literature and confirmed as the fifth basic taste (Chaudhari et al [2000] Nat. Neurosci. 3: 113). The Japanese word "umami" means delicious and is used as a synonym for the characteristic sensory properties of monosodium glutamate (MSG) and certain purine-5'-nucleotides like inosine-5'-monophosphate (5'-IMP) or guanosine-5'-monophosphate (5'-GMP).

Since several years, the flavour and food industry is interested in developing alternative flavour enhancing systems for culinary products. Thus, food manufacturers aim at finding new molecules imparting the umami character as known from MSG in order to reduce its added amount in manufactured products.

In addition to MSG and 5'-nucleotides, some other molecules have been reported as umami-like compounds, such as organic acids like tartaric and succinic acid (Ney [1971] Z. Lebensm. Unters. Forsch. 146: 141; Velisek et al. [1978] Nahrung 22: 735) and di- to octa-peptides (Yamasaki and Maekawa [1978] Agric. Biol. Chem. 42: 1761; Noguchi et al. [1975] J. Agric. Food Chem. 23: 49).

WO 9704667 discloses tripeptides containing a hydrophobic amino acid residue and at least one acidic amino acid residue as well as amino acid derivatives with an N-lactoyl residue as flavouring ingredients to impart savoury taste and increase the mouthfeel of foodstuffs. It is also disclosed that these peptides and derivatives can mimic organoleptic features of MSG.

The aim of the present invention is concerned with the problem of providing alternative flavouring compounds to MSG in order to impart umami taste to food products.

To this end, the present invention relates to a flavouring composition useful for imparting umami taste to food products, which comprises N-acetylglycine or salts thereof in an effective amount to induce umami taste perception upon consumption of the composition.

In another aspect, the present invention provides the use of N-acetylglycine or salts thereof in food products in an effective amount in order to induce an umami taste perception upon consumption of the food product.

The prefered salts of the N-acetylglycine of the flavouring composition may be monosodium or monopotassium salts.

N-acetylglycine according to the present invention may be purchased from a chemical company like Fluka (Fluka 01180, puriss. 99 %).

The food products that are concerned with the use of N-acetylglycine according to the present invention may be dehydrated products such as bouillons, soups, snacks, cereal products, process flavours, culinary products such as cooking aids or powdered flavourings for example, but also intermediate moisture foods such as spreadable pastes, sausages, and petfoods as well, for exemple. However, the compounds according to the present invention may also be used in full moisture foods, like chilled prepared meals, frozen meals, such as pizzas for example.
In a third aspect, the present invention provides a method for inducing an umami taste perception in the mouth of the consumers of a food product comprising adding an effective amount of the flavouring composition according to claim 1 to the food product.

Surprisingly, N-acetylglycine salts of the flavouring compositions according to the present invention have been found to be able to elicit umami taste. Indeed, this is very surprising because, according to our knowledge, N-acetylglycine has never been described as umami-tasting. JP 56010012 B describes the use of N-acetylglycine for preventing the development of off-taste in thawed milk because of milk denaturation upon freezing. However, this document is completely silent regarding the taste of such compound and especially umami taste. JP 57170146 A discloses a syrup for a confection comprising N-acetylglycine.
Hence, the flavouring compositions according to the present invention allow to improve and to increase the mouthfeel of the food to which they are added. Thus, it has surprisingly been found that the flavouring compositions according to the present invention are able to mimic the sensory properties of MSG, the typical umami taste ingredient, widely used as a flavour enhancing compound. The flavouring compositions according to the present invention can contribute to give or to reinforce the umami taste features in the food products in which they are incorporated. Such compositions can then replace, at least partially, monosodium glutamate in foodstuffs in which flavour enhancers are desired.

**Sensory Analysis.** The panel was composed of 8 trained assessors. The panel was trained with reference solutions for the taste attributes "sweet", "sour", "salty", "glutamate-like, umami" and "bitter", and with mixtures of the reference stimuli.
We proceed to the sensory evaluation of N-acetylglycine under the form of a 20 mM solution of its monosodium salt in water, in salty water and as a bouillon preparation. All the preparation elicited umami taste with an intensity ranked 2 to 3 on a scale of 1 to 5, where 5 is the umami intensity of a 10 mM MSG aqueous solution. Moreover, it has also been observed that the ability of the molecule to elicit umami taste is sligthly different of MSG's one as the maximal sensory effect occurs during the presence of the compound in the mouth ans is short-lasting after the solution is swallowed or expelled out.

## Claims

1. Use of N-acetylglycine or salts thereof in food products in an effective amount in order to induce an umami taste perception upon consumption of the food product.

## Patentansprüche

1. Verwendung von N-Acetylglycin oder von Salzen davon in Lebensmittelprodukten in einer wirksamen Menge, um eine Umami-Geschmackswahrnehmung beim Verzehr des Lebensmittelprodukts auszulösen.

## Revendications

1. Utilisation de N-acétylglycine ou de ses sels dans des produits alimentaires, en une quantité efficace afin d'induire une perception de goût d'umami lors de la consommation du produit alimentaire.
